# EUROPEAN PATENT SPECIFICATION

(11) **EP 1 042 980 B1**
(45) Date of publication and mention of the grant of the patent: **25.09.2002**
(21) Application number: 00301080.8
(22) Date of filing: 11.02.2000
(51) Int. Cl.: A47L 5/14, A47L 9/16

(54) **A cyclone vacuum cleaner**
Zyklonstaubsauger
Aspirateur du type cyclone

(43) Date of publication of application: 11.10.2000
(73) Proprietor: Black & Decker Inc., Newark Delaware 19711 (US)
(72) Inventor: Webster, Craig, c/o Cambridge Consultants Ltd., Cambridge CB4 4DW (GB)
(74) Representative: Bell, Ian Stephen

(56) References cited:
- EP-A- 0 674 869
- WO-A-99/22844
- BE-A- 620 628
- DE-C- 661 573
- DE-U- 29 901 346
- US-A- 1 420 665
- US-A- 1 664 092
- US-A- 5 692 262

## Description

The present invention relates to vacuum cleaning apparatus and in particular to debris collection apparatus for use in the garden.

Vacuum cleaning apparatus for use in the garden to collect leaves, twigs, grass cuttings etc is well known. Such apparatus commonly comprises a tube having at one end an impeller which draws air and entrained debris into the tube. The air together with the entrained debris passes along the tube, through the path of the impeller and is then fed into a collection bag. The collection bag is porous and acts as a filter, trapping the debris within the bag whilst allowing the air to pass through the walls of the bag to the open atmosphere. The impeller can also be arranged so that it shreds the debris as it passes through the path of the impeller. To do this, the impeller is situated directly in the path of the debris.

However, such a design suffers from the problem that the bag does not filter the debris from the air in a perfect manner because it allows some of the debris, particularly smaller sized debris such as dust, to pass through the wall of the bag and into the atmosphere. This is a particular problem when the bag is located against or in close proximity to the body of the operator. Debris, particularly dust, is expelled from the collection bag onto the body of the operator, which is undesirable as it may dirty the operators clothing.

When the debris is wet, the additional moisture is also able to pass through the walls of the bag, thus wetting the clothing of the operator. Furthermore, if the moisture mixed with some of the debris, such as dust, which is able to pass through the walls of the bag, it can stain the operator's clothing.

The debris, particularly when wet, can clog the pores in the walls of the bag, thus reducing the porosity of the walls of the bag thus preventing air from escaping from the bag. This reduces the effectiveness of the collection bag as a filter and hence the performance of the vacuum cleaning apparatus as a whole.

The separation of debris from an airflow using a cyclone system is known. Such systems comprise a chamber in which the air, together with the entrained debris is rapidly rotated. The debris is forced to the edge of the chamber by centrifugal forces, where it collects. However, where such a cyclone system is employed in a vacuum cleaning apparatus, the air is fed into the chamber under pressure where it is then guided into a rapid rotational or spiralling movement. The apparatus which causes the air and entrained debris to rotate or spiral at high speed is located outside of the chamber, the rapidly moving air and entrained debris then passing into the chamber through a duct. The air and entrained debris have to rotate at a high rotational speed in order for the cyclone system to work correctly. The speed at which the air enters the chamber at a fixed volumetric rate is dependent on the cross sectional area of the duct supplying the air and entrained debris, the smaller the cross sectional area, the faster they enter the chamber. However, a reduction in the cross-sectional area of the duct can result in energy being wasted due to friction as the air and entrained debris is forced through the duct. Furthermore, large pieces of debris may block the duct. However, if the cross sectional area is increased, the rate at which the air and debris enters into the chamber is reduced resulting in reduced centrifugal and hence separational forces.

DE-C-661573 discloses a vacuum cleaning apparatus and which forms the closest piece of prior art. However, the vacuum cleaning apparatus disclosed in DE-C-661573 suffers from the problem that it relies on the use of a mesh screen to filter the debris from the air flow.

DE-U-299 01 346 discloses a cyclonic dust separation system having a chamber, a fan located within the chamber for generating a rotating movement of the air and entrained dust, and separation means for separating the rotating air into two parts, the first part which comprises air and entrained debris due to centrifugal forces located in the outer region of the chamber and a second part comprising air located away from the edge of the chamber. However, due to the arrangement of the cyclonic dust separation system, the air expelled from the fan can at most be rotated through 360°, but in some circumstances considerably less, within the chamber before coming into contact with the separating means and therefore air with dust still entrained will form part of the second part.

Accordingly, there is provided a vacuum cleaning apparatus comprising a cyclone system to extract debris from an airflow in which the debris is entrained by the use of centrifugal forces, the cyclone system comprising a chamber; an inlet duct connected to the chamber through which, in use, air and entrained debris enter the chamber; an outlet duct connected to the chamber through which, in use, air is expelled from the chamber; and an impeller located within the chamber which, in use, generates a rapid rotational movement of the air and entrained debris in the chamber, which separates the debris from the airflow, by the use of centrifugal forces, characterised in that the cyclone system is adapted so that the rotational movement of the air and entrained debris is a spiralling movement along the length of the chamber, the rapid rotational movement of the air and entrained debris in the chamber causing the debris to be forced towards the outer wall of the chamber due to the centrifugal forces, the air flow being separated into two parts, a first part in which the debris is entrained due to it being located at the outer regions of the chamber due to centrifugal forces and a second part which passes through the outlet duct.

Though an ideal cyclone system would separate all of the debris from the air flow so that air only is expelled through the outlet duct from the chamber, it will be clear to a person skilled in the art that a small proportion of the debris may be expelled through the outlet along with the air due to the imperfections of such a system. However, the amount expelled would be substantially less than that entering into the chamber. The scope of the present invention is clearly intended to also cover vacuum cleaning apparatus comprising a cyclone where a small portion of debris is expelled from the chamber.

By using an impeller located within the chamber to generate the rapid rotational movement of the air and entrained debris, it can enable the cyclone system to be constructed with a duct leading into the chamber having a large cross-sectional area. This can avoid wasting energy due to forcing the air and entrained debris down a narrow passageway. Furthermore, an inlet duct with a greater cross-sectional area than in conventional systems is less likely to become blocked due to large pieces of debris.

Preferably, in use, the impeller draws air and entrained debris through the inlet duct into the chamber. The use of the impeller to draw air and entrained debris into the chamber, in addition to generating a rapid rotational movement in the air and entrained debris, can enable the cyclone system to be constructed without further suction means to draw the air and entrained debris from outside for supply to the chamber.

Ideally, in use, the impeller shreds the entrained debris. Such a construction can simplify the design by utilising the impeller to perform three functions; to draw in air and entrained debris from the outside; to generate a rapid rotational movement of the air and entrained debris; and to shred the debris.

The location of the rotational movement of the air and entrained debris can be between the inlet and outlet duct.

The debris can be caught within the chamber. Once the chamber is full, the debris is removed from the chamber. However, the cyclone system can further comprise a debris collection duct through which, in use, debris is expelled from the chamber. This can ensure that the chamber is automatically and continually emptied.

A debris collection container can be further provided which, in use, collects the debris.

Preferably, a feedback duct connects between the collection container and the inlet duct. This can provide one way by which the air within the collection container is able to escape from the collection container. Because the feedback duct connects to the inlet duct, the suction effect within the inlet duct due to the impeller can create a reduced pressure within the collection container which can assist in drawing the debris into the collection container. Furthermore, any debris which accidentally leaves the collection container via the feedback duct, would enter the inlet duct and then pass back into the cyclone system where it would again be fed back into the collection container.

The collection container can be made from a permeable material so that air can permeate through the walls of the container. However, as the vacuum cleaning apparatus uses a cyclone system to extract the debris from the air flow in which it is entrained, ideally the collection chamber is constructed from non permeable material. This prevents any debris passing through the wall of the collection container avoiding dirt and stains forming on the operators clothing whilst the vacuum cleaning apparatus is in use.

The invention will now be described with reference to the accompanying drawings of which:
Figure 1 is a perspective view of the vacuum cleaning apparatus; and
Figure 2 is a vertical cross sectional side view of the vacuum cleaning apparatus.

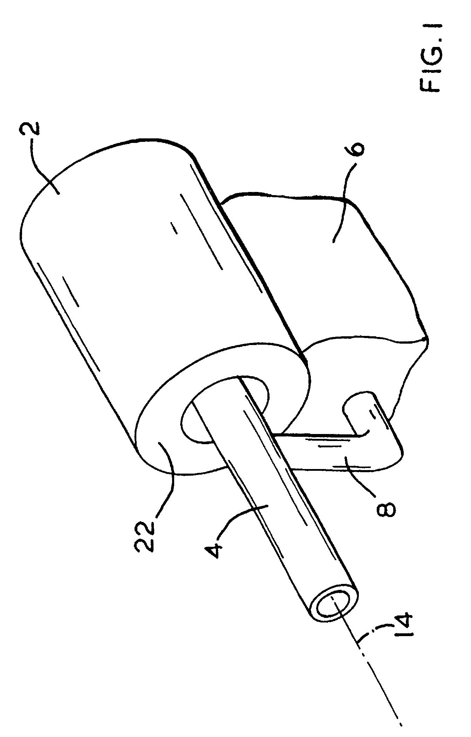

Referring to Fig. 1, the vacuum cleaning apparatus comprises a body (2) having a suction duct (4) which extends forward of the body (2) and a collection bag (6) attached to the side of the body (2). An air return pipe (8) connects between the collection bag (6) and the suction duct (4). A handle (not shown) together with an electric switch (not shown) is mounted on the body (2).

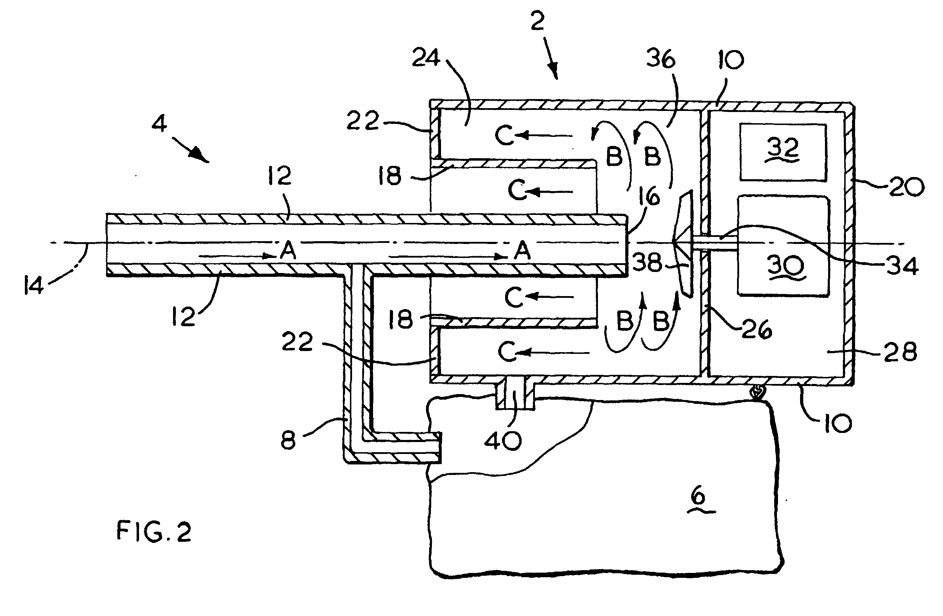

The vacuum cleaning apparatus will now be described in greater detail with reference to Fig. 2.

The body (2) of the vacuum cleaning apparatus is constructed from a tube (10) of circular cross section. A second tube (12) of a smaller circular cross section forms the suction duct (4). The longitudinal axis (14) of the second tube (12) is located in the same position as the longitudinal axis (14) of the large outer tube (10). The end (16) of the second inner tube (12) located within the body (2) of the vacuum cleaning apparatus extends into the large outer tube (10) half way along the length of the large outer tube (10).

A third middle tube (18) is located between the large outer tube (10) and the second inner tube (12). The middle tube (18) also has a circular cross section, the longitudinal axis of the tube (18) being co-axial with the axes of the inner and outer tubes. One end of the middle tube extends to the end of the outer tube. The other end extends into the body (2) to a distance less than half way along the body (2).

One end (20) of the outer tube (10) is sealed. At the other end, a "washer" shaped plate (22) seals the space between the end of the outer tube and the end of the middle tube, thus forming a toroidal chamber (24) between the inner surface of the outer tube (10) and the outer surface of the middle tube (18).

A number of struts (not shown) interconnect between the three tubes (10,12,18) to rigidly secure the three tubes (10,12,18) to each other.

An internal wall (26) is formed within the body to provide an end chamber (28). An electric motor (30) and a battery (32) are mounted within the chamber (28). The battery (32) is electrically connected to the motor (30) via a switch (not shown) , so that depression of the switch completes the electric circuit (not shown) thus activating the motor (30). A connector (not shown) which makes electrical contact with the circuit is provided on the body (2) so that the vacuum cleaning apparatus can be connected to an electricity supply to recharge the battery (32).

The motor (30) comprises a drive shaft (34) which has a longitudinal axis co-axial with the axes (14) of the three tubes (10,12,18). The drive shaft (34) projects through the internal wall (26) into a second chamber (36) defined by the end (16) of the inner tube (10) and the internal wall (20). An impeller (38) is mounted on the drive shaft (34) which faces towards the end (16) of the inner tube (10).

An outlet duct (40) located at the end of the toroidal chamber (24) passes through the wall of the outer tube (10) and into the collection bag (6). The air return pipe (8) passes through the wall of the collection bag (6) to the suction duct (4) where it passes through the wall of the inner tube (12).

In use, the operator activates the vacuum cleaning device by depression of the switch (not shown) and then directs the operative end of the suction duct (4) towards the debris to be removed.

Air and entrained debris are sucked by the impeller (38) into the inner tube (12) in a direction indicated by the Arrows A. The air and debris then feed into and pass through the path of the impeller (38). The impeller (38) shreds the debris as it passes through the impeller (38) in known fashion. The air and entrained debris are then expelled in a tangential direction from the impeller. The air and debris are expelled in such a manner that a rapid rotation movement is induced of the air and debris in the chamber (36) (indicated by Arrows B). As the air and debris rotate, the debris is forced towards the wall of the chamber (36) due to centrifugal forces. As more air and debris are drawn to the impeller (38) and then expelled tangentially in a rapid rotational movement, the existing swirling air is pushed along the length of the chamber (36) in a direction indicated by Arrows C resulting in a spiral motion being induced in the air. When the air meets the end of the middle tube (18), it is separated into parts, a first part which travels between the inner surface of the outer tube (10) and the outer surface of the middle tube (18), and a second part which travels between the inner surface of the middle tube (18) and the outer surface of the inner tube (12). As the air is separated into two parts, the debris entrained in the air travels with the first part of air due to it being located at the outer regions of the chamber (36), due to centrifugal forces. The second part of the air contains little or no debris. The second part travels between the inner surface of the middle tube (18) and the outer surface of the inner tube (12) until it is expelled to the atmosphere.

The first part of the air together with the debris travels along between the inner surface of the outer tube (10) and the outer surface of the middle tube (18) until it encounters the outlet duct (40). The air and debris then pass through the outlet duct (40) into the collection bag (6) where the debris is collected. The excess air then passes through the air return pipe (8) back into the inner tube (12) due to the suction force within the inner tube (12) caused by the action of the impeller (38). Any debris accidentally discharged from the collection bag (6) through the return pipe (8) is passed into the inner tube (12) and then passes through the cyclone system where it is again separated and then fed back into the collection bag (6).

The collection bag (6) is made from a non-porous material such that neither the air or debris is able to pass through the wall of the bag.

The embodiment of the present invention has been described in relation to a vacuum cleaner for use in a garden to collect garden debris. However, it will be appreciated by the reader that the invention can be utilised in a wide range of cleaning devices such as domestic vacuum cleaners for use in the home.

## Claims

1. A vacuum cleaning apparatus comprising a cyclone system to extract debris from an airflow in which the debris is entrained by the use of centrifugal forces, the cyclone system comprising a chamber (36); an inlet duct (4) connected to the chamber (36) through which, in use, air and entrained debris enter the chamber (36); an outlet duct connected to the chamber (36) through which, in use, air is expelled from the chamber (36); and an impeller (38) located within the chamber (36) which, in use, generates a rapid rotational movement of the air and entrained debris in the chamber (36), which separates the debris from the airflow, by the use of centrifugal forces, **characterised in that** the cyclone system is adapted so that the rotational movement of the air and entrained debris is a spiralling movement along the length of the chamber (36), the rapid rotational movement of the air and entrained debris in the chamber (36) causing the debris to be forced towards the outer wall of the chamber due to the centrifugal forces, the air flow being separated into two parts, a first part in which the debris is entrained due to it being located at the outer regions of the chamber (36) due to centrifugal forces and a second part which passes through the outlet duct.

2. A cleaning apparatus as claimed in claim 1 wherein, in use, the impeller (38) draws air and entrained debris through the inlet duct (4) into the chamber (36).

3. A cleaning apparatus as claimed in either 1 or 2 wherein, in use, the impeller (38) shreds the entrained debris.

4. A cleaning apparatus as claimed in any one of the previous claims wherein the rotational movement of the air and entrained debris is between the inlet and outlet ducts.

5. A cleaning apparatus as claimed in any one of the previous claims wherein the debris is caught within the chamber (36).

6. A cleaning apparatus as claimed in any one of claims 1 to 4, wherein the cyclone system further comprises a debris collection duct (40) through which, in use, debris is expelled from the chamber (36).

7. A cleaning apparatus as claimed in claim 6, wherein there is further provision of a debris collection container (6) into which, in use, the debris is collected.

8. A cleaning apparatus as claimed in claim 7, wherein a feedback duct (8) connects between the collection container (6) and the inlet duct (4).

9. A cleaning apparatus as claimed in either claims 7 or 8, wherein the collection container (6) is constructed from non-permeable material.

## Patentansprüche

1. Staubsaugergerät mit einem Zyklonsystem, um Schmutz aus einer Luftströmung, in der Schmutz mitgerissen ist, durch die Verwendung von Zentrifugalkräften zu extrahieren, wobei das Zyklonsystem aufweist: eine Kammer (36); einen Einlaßkanal (4), der mit der Kammer (36) verbunden ist, durch den bei Betrieb Luft und mitgerissener Schmutz in die Kammer (36) eintreten; einen Auslaßkanal, der mit der Kammer (36) verbunden ist, durch den bei Betrieb Luft aus der Kammer (36) ausgestoßen wird; und ein in der Kammer (36) angeordnetes Gebläse (38), das bei Betrieb in der Kammer (36) eine schnelle Rotationsbewegung der Luft und des mitgerissenen Schmutzes erzeugt, wodurch der Schmutz durch die Verwendung von Zentrifugalkräfte von der Luftströmung getrennt wird, **dadurch gekennzeichnet, daß** das Zyklonsystem dazu ausgestaltet ist, daß die Rotationsbewegung der Luft und des mitgerissenen Schmutzes eine spiralförmige Bewegung entlang der Länge der Kammer (36) ist, die schnelle Rotationsbewegung der Luft und des mitgerissenen Schmutzes in der Kammer (36) bewirkt, daß der Schmutz infolge der Zentrifugalkräfte in Richtung auf die Außenwand der Kammer gedrückt wird, die Luftströmung in zwei Teile getrennt wird, einen ersten Teil, in dem der Schmutz mitgerissen ist und sich infolge der Zentrifugalkräfte in den äußeren Bereichen der Kammer (36) befindet, und einen zweiten Teil, der durch den Auslaßkanal strömt.

2. Staubsaugergerät nach Anspruch 1, bei dem bei Betrieb das Gebläse (38) Luft und mitgerissenen Schmutz durch den Einlaßkanal (4) in die Kammer (36) einsaugt.

3. Staubsaugergerät nach einem der Ansprüche 1 oder 2, bei dem bei Betrieb das Gebläse (38) den enthaltenen Schmutz schreddert.

4. Staubsaugergerät nach einem der vorhergehenden Ansprüche, bei dem die Rotationsbewegung der Luft und des mitgerissenen Schmutzes zwischen dem Einlaß- und dem Auslaßkanal erfolgt.

5. Staubsaugergerät nach einem der vorhergehenden Ansprüche, bei dem der Schmutz in der Kammer (36) gefangen ist.

6. Staubsaugergerät nach einem der Ansprüche 1 bis 4, bei dem das Zyklonsystem außerdem einen Staubsammelkanal (40) aufweist, durch den bei Betrieb Schmutz aus der Kammer (36) ausgestoßen wird.

7. Staubsaugergerät nach Anspruch 6, bei dem außerdem ein Schmutzsammelbehälter (6) vorgesehen ist, in dem bei Betrieb der Schmutz gesammelt wird.

8. Staubsaugergerät nach Anspruch 7, bei dem der Sammelbehälter (6) durch einen Rückführkanal (8) mit dem Einlaßkanal (4) verbunden ist.

9. Staubsaugergerät nach einem der Ansprüche 7 und 8, bei dem der Sammelbehälter (6) aus einem undurchlässigen Material hergestellt ist.

## Revendications

1. Aspiratèur comprenant un système cyclone pour extraire les débris d'un courant d'air dans lequel les débris sont entraînés par l'utilisation des forces centrifuges, le système cyclone comprenant une chambre (36) ; un conduit d'entrée (4) raccordé à la chambre (36) par l'intermédiaire duquel, en utilisation, l'air et les débris entraînés entrent dans la chambre (36) ; un conduit de sortie raccordé à la chambre (36) par l'intermédiaire duquel, en utilisation, l'air est expulsé de la chambre (36) ; et une roue ventilateur (38) placée à l'intérieur de la chambre (36) qui, en utilisation, génère un mouvement rotatif rapide de l'air et des débris entraînés dans la chambre (36), qui sépare les débris du courant d'air par l'utilisation des forces centrifuges, **caractérisé en ce que** le système cyclone est conçu de sorte que le mouvement rotatif de l'air et des débris entraînés est un mouvement en spirale le long de la longueur de la chambre (36), le mouvement rotatif rapide de l'air et des débris entraînés dans la chambre (36) amenant les débris à être forcés vers la paroi externe de la chambre en raison des forces centrifuges, le courant d'air étant séparé en deux parties, une première partie dans laquelle les débris sont entraînés du fait qu'ils sont placés au niveau des régions externes de la chambre (36) en raison des forces centrifuges et une seconde partie qui passe par le conduit de sortie.

2. Aspirateur selon la revendication 1, dans lequel, en utilisation, la roue ventilateur (38) aspire l'air et les débrfs entraînés par la conduite d'entrée (4) dans la chambre (36).

3. Aspirateur selon l'une des revendications 1 ou 2, dans lequel, en utilisation, la roue ventilateur (38) déchiquète les débris entraînés.

4. Aspirateur selon l'une quelconque des revendications précédentes, dans lequel le mouvement rotatif de l'air et des débris entraînés est entre les conduits d'entrée et de sortie.

5. Aspirateur selon l'une quelconque des revendications précédentes, dans lequel les débris sont capturés à l'intérieur de la chambre (36).

6. Aspirateur selon l'une quelconque des revendications 1 à 4, dans lequel le système cyclone comprend, en outre, un conduit de collecte de débris (40) par l'intermédiaire duquel, en utilisation, les débris sont expulsés de la chambre (36).

7. Aspirateur selon la revendication 6, dans lequel il est de plus prévu un conteneur de collecte de débris (6) dans lequel, en utilisation, les débris sont collectés.

8. Aspirateur selon la revendication 7, dans lequel un conduit de renvoi (8) se raccorde entre le conteneur de collecte (6) et le conduit d'entrée (4).

9. Aspirateur selon l'une des revendications 7 ou 8, dans lequel le conteneur de collecte (6) est constitué d'un matériau non perméable.
